# EUROPÄISCHE PATENTSCHRIFT

(11) **EP 2 040 876 B1**
(45) Veröffentlichungstag und Bekanntmachung des Hinweises auf die Patenterteilung: **21.09.2016**
(21) Anmeldenummer: 07801136.8
(22) Anmeldetag: 11.07.2007
(51) Int. Cl.: B23P 6/00, F01D 5/00, B23K 1/00, B23K 26/28

(54) **VERFAHREN ZUR REPARATUR VON TURBINENSCHAUFELN**
METHOD FOR REPAIRING TURBINE BLADES
PROCÉDÉ DE RÉPARATION D'AUBES DE TURBINE

(30) Priorität: 19.07.2006 DE 102006033799
(43) Veröffentlichungstag der Anmeldung: 01.04.2009
(73) Patentinhaber: MTU Aero Engines AG, 80995 München (DE)
(72) Erfinder: RICHTER, Karl-Hermann, 85229 Markt Indersdorf (DE); EMILJANOW, Klaus, 31319 Sehnde (DE)
(86) Internationale Anmeldenummer: PCT/DE2007/001227
(87) Internationale Veröffentlichungsnummer: WO 2008/009267

(56) Entgegenhaltungen:
- EP-A- 0 837 220
- WO-A-2004/096487
- JP-A- 9 168 927
- US-A- 3 802 046
- US-A- 5 444 911
- US-A- 5 873 703
- US-A1- 2005 091 848

## Beschreibung

Die vorliegende Erfindung betrifft ein Verfahren zur Reparatur von Turbinenschaufeln. Schäden an Turbinenschaufeln, insbesondere Hochdruckturbinenschaufeln (HDT-Schaufeln), die unterhalb des Schaufelspitzenbereichs aufgetreten sind, können heute nur bedingt repariert werden. Hier ergeben sich insbesondere Einschränkungen bezüglich der gesamten Risslänge und der Risslage. Aufgrund der Anforderungen an die Verbindungsqualität, kommen als Verfahren zum Fügen eines Ersatzteils insbesondere Diffusionsverbindungen (Lötverbindungen), und Strahlschweißverbindungen, wie beispielsweise durch Lichtbogenschweißen oder EB-Schweißen erzeugte Verbindungen, in Frage. Beide Verfahren weisen Nachteile auf; so können beispielsweise beim Strahlschweißen nicht die inneren Wände verbunden werden. Beim Diffusionslöten können Bindefehler entstehen, die nur schwer detektierbar sind.

Die US Patentanmeldung US 2005/0091848A1 beschreibt ein Verfahren zum Herstellen und Reparieren von Turbinenschaufeln. Dabei umfasst das Verfahren zum Reparieren von Turbinenschaufeln das Entfernen der Schaufelspitzenkappe und eines Abschnittes des Schaufelprofils von der Turbinenschaufel, um eine Reparaturfläche an dem Schaufelprofil zu bilden. Dann wird eine Ersatzschaufelspitze hergestellt, die eine Austauschschaufelspitze und einen Austauschschaufelabschnitt aufweist, die an die zu reparierende Oberfläche angepasst sind. Schließlich wird der Austauschspitzenabschnitt mit der Reparaturfläche verbunden. Die Verbindung zwischen dem Austauschteil und der Reparaturfläche erfolgt dabei entweder durch thermisches oder durch thermomechanisches Diffusionsverbinden, durch Hochtemperaturlöten oder Schweißen.

Auch hier werden die oben genannten Nachteile der Verbindung des Austauschteils mit der Reparaturfläche nicht vermieden.

Aufgabe der vorliegenden Erfindung ist es daher, ein Verfahren zur Reparatur von Turbinenschaufeln zur Verfügung zu stellen, welches die Nachteile des Standes der Technik vermeidet. Insbesondere soll die Reparierbarkeit von beschädigten Hochdruckturbinenschaufeln, vorzugsweise signifikant, erhöht werden.

Diese Aufgabe wird durch die Merkmale des Patentanspruchs 1 gelöst. Vorteilhafte Ausfübrungsformen und Weiterbildungen werden in den Unteransprüchen angegeben.

Hierdurch wird ein Verfahren zur Reparatur von Turbinenschaufeln zur Verfügung gestellt, welches die Nachteile des Standes der Technik vermeidet. Insbesondere wird die Reparierbarkeit von beschädigten Hochdruckturbinenschaufeln signifikant erhöht und die Lebensdauer der reparierten Teile dadurch deutlich verbessert.

In vorteilhafter Weiterbildung erfolgt nach dem Löten, insbesondere Hochtemperaturlöten, und nach dem Schweißen, insbesondere Strahlschweißen eine Nach- und / oder Endbearbeitung (Schritt e)); dabei können beispielsweise Schritte wie Wärmebehandlung, mechanische Bearbeitung und / oder Bohren etc. durchgeführt werden. Ferner kann vorgesehen sein, dass anschließend, d.h. insbesondere nach Schritt d) oder - sofern Schritt e) vorgesehen ist - nach Schritt e) die reparierte Turbinenschaufel geprüft wird (Schritt f)).

Beispielsweise bedingt durch den Gießprozess und den Betrieb der Turbinenschaufel, insbesondere Hochdruckturbinenschaufeln (HDT-Schaufeln), im Triebwerk, kann die Soll-Kontur erheblich von der Ist-Kontur der zu reparierenden Turbinenschaufel abweichen. Deshalb wird im Verfahrensschritt c) das Austauschschaufelteil an die Ist-Geometrie des Restschaufelblattes angepasst. Es kann insbesondere vorgesehen sein, dass im Schritt c) sichergestellt wird, dass an der Schnittstelle die Innen- und Außenkontur des Ersatzteils, d.h. des Austauschschaufelteils, mit der Innen- und Außenkontur des Restschaufelblatts übereinstimmt. Ferner wird in vorteilhafter Gestaltung sichergestellt, dass der Übergang vom Restschaufelblatt zum Ersatzteil stetig ist, das heißt sprungartige Änderungen der Innen- und Außenkontur vermieden werden. Diese Anforderungen können beispielsweise wie folgt verfüllt werden:
- bevorzugt gießtechnische Herstellung eines Ersatzteils mit Übermaß an der Innen- und Außenkontur. Das Übermaß wird in vorteilhafter Gestaltung dabei derart gewählt, dass alle oder zumindest ein Großteil der realen Ist-Konturen an der zu fügenden Fläche des Restschaufelblatts "abgedeckt" werden;
- Erfassen der Ist-Geometrie der zu fügenden Fläche des Restschaufelblatts, beispielsweise durch Bildverarbeitung oder andere Verfahren, wie Abdruck oder Ähnliches;
- Automatisierte oder manuelle Anpassung des Ersatzteils an die Ist-Geometrie des Restschaufelblatts. An der Schnittstelle sollen in vorteilhafter Gestaltung die Außen- und Innenkontur von Restschaufelblatt und Ersatzteil übereinstimmen. Da der Übergang vorzugsweise stetig sein soll, wird in vorteilhafter Weiterbildung die Kontur des Ersatzteils durch Interpolation angepasst.

Ein weiteres mögliches Verfahren zur Herstellung des Ersatzteils ist das sogenannte "Selectiv Laser Melting" (SLM). Mit diesem Verfahren ist es möglich, ein maßgeschneidertes Ersatzteil aufgrund der Vermessung der Ist-Kontur des Restschaufelblatts herzustellen. Allerdings ist bei diesem Verfahren ein Finishing, d.h. eine Endbearbeitung der Außenkontur, erforderlich.

In Verfahrensschritt d) ist ein kombiniertes Fügeverfahren angegeben, da die ausschließliche Anwendung eines einzigen Fügeverfahrens, beispielsweise Diffusionslöten oder Strahlschweißen, mit Nachteilen verbunden ist. Daher werden die Verfahren Löten, insbesondere Hochtemperaturlöten, und Schweißen, insbesondere Strahlschweißen, in Kombination durchgeführt. Dies kann beispielsweise wie folgt bewerkstelligt werden:
- Zunächst wird Hochtemperaturlöten (HT-Löten) durchgeführt. Dazu werden mit einem geeigneten Lot, bei dem die Wiederaufschmelztemperatur größer als die Betriebstemperatur ist, entweder die gesamte Schnittstelle oder nur die Stege, die die einzelnen Kammern, die insbesondere innerhalb des Schaufelblattes bzw. Restschaufelblattes bzw. Ersatzteils gegeben sind, voneinander trennen, belotet. Das Beloten kann beispielsweise mit einem Lotformteil und / oder durch PVD-Beschichten und / oder durch Paste erfolgen.
- Nach dem Beloten erfolgt das Hochtemperaturlöten beispielsweise im Vakuumofen oder induktiv unter Schutzgasatmosphäre. Danach ist zumindest die Innenkontur gefügt, gegebenenfalls sogar Innen- und Außenkontur.
- Das Fügen der Außenkontur erfolgt durch Schweißen, bevorzugt durch Strahlschweißen. Falls die Außenkontur bereits durch Löten, insbesondere Hochtemperaturlöten, gefügt ist, wird die Lötnaht "überschweißt".
- Das Schweißen, insbesondere Strahlschweißen, wird bevorzugt mit einem Laser durchgeführt. Eine mögliche Variante ist eine Stumpfschweißung mit gegebenenfalls (z.B. induktiver) Vorwärmung der Fügezone. Eine weitere Variante ist das Fügen durch Auftragsschweißen. Dazu werden die zu fügenden Teile an der Außenkontur V-förmig bzw. um einen Winkel Φ angeschrägt, wobei Φ beispielsweise gleich 45° ist, aber auch abweichend gestaltet sein kann. Anschließend wird durch Auftragsschweißen der V-förmige Spalt mit Zusatzwerkstoff, wie Pulver oder Draht, aufgefüllt und dadurch eine Verbindung zwischen Zusatzwerkstoff, Ersatzteil und Restschaufelteil hergestellt. Gegebenenfalls kann auch bei dieser Variante mit, insbesondere induktiver, Vorwärmung gearbeitet werden. Der in Form von Pulver oder Draht vorliegende Zusatzwerkstoff kann entweder artgleich oder artfremd sein. Durch Verwendung eines artfremden Zusatzwerkstoffes können die metallurgischen Eigenschaften bzw. die Schweißeignung der Verbindung positiv beeinflusst werden.

Aufgrund der hohen Anforderung an das Bauteil erfolgt vorzugsweise im Verfahrensschritt f) eine 100%ige Prüfung der Fügezone nach Durchführung der Reparatur. Diese Prüfung wird bevorzugt mittels Computertomographie unter Verwendung eines Zeilendetektors durchgeführt.

Die Erfindung wird nachfolgend anhand der Beschreibung der beigefügten Figuren beispielhaft anhand von Ausführungsbeispielen erläutert. Darin zeigen:
Figur 1 eine perspektivische Darstellung eines Restschaufelblattes und darüber ein passendes Ersatzteil:
Figur 2 das Restschaufelblatt mit dem damit verbundenem Ersatzteil:
Figur 3 ein Laserstrahlgeschnittenes Lotformteil im Schnitt:
Figur 4 eine schematische Detaildarstellung zum Fügen der Außenkontur durch Auftragsschweißen mit V-förmigem Spalt.

Nachfolgend werden gleiche oder ähnliche Bauteile mit gleichen Bezugszeichen versehen.

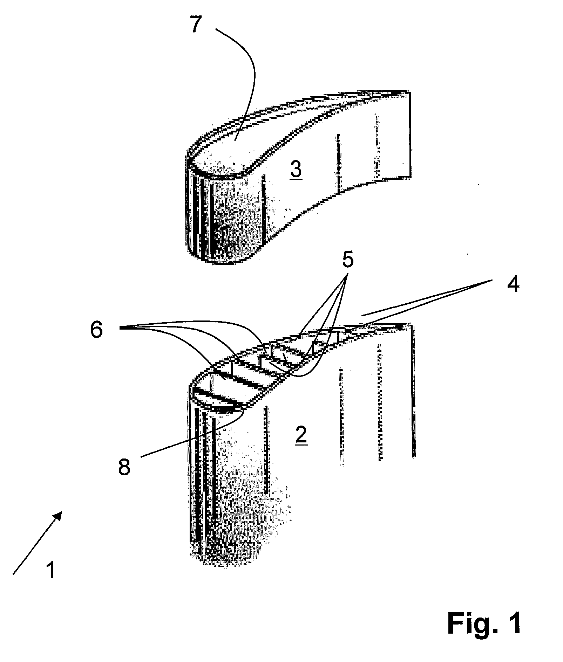

Figur 1 zeigt eine perspektivische Ansicht einer Turbinenschaufel 1. Die Darstellung in Figur 1 zeigt dabei im unteren Bereich ein entsprechendes Restschaufelblatt 2, welches bereits von dem beschädigten Schaufelspitzenteil befreit wurde. Das Abtrennen des beschädigten Schaufelspitzenteils vom Restschaufelblatt 2 erfolgt entlang einer standardisierter Schnittebene 4. Die Turbinenschaufel 1 ist hohl ausgebildet, wobei in ihrem Innerem Stege 5 vorhanden sind, mittels welchen Kammern 6 ausgebildet werden, wie gut im Bereich des Restschaufelblatts 2 in Fig. 1 erkennbar sind.

Oberhalb des Restschaufelblatts 2, ist ein Austauschschaufelteil 3 mit Schaufelspitze 7 dargestellt.

Das Austauschschaufelteil 3 ist dabei an die Ist-Geometrie des Restschaufelblatts 2 angepasst, das heißt die Außenkontur 8 des Restschaufelblatts 2 stimmt mit der Außenkontur 8 des Austauschschaufelteils 3 überein.

Die Reparaturschritte einer in Figur 1 beispielhaft gezeigten Hochdruckturbinenschaufel durch Austausch eines beschädigten Schaufelteils werden gemäß diesem Ausführungsbeispiel wie folgt durchgeführt:
a) Gießtechnische Herstellung eines Austauschschaufelteils 3
b) Abtrennen des beschädigten Bereichs von der zu reparierenden Turbinenschaufel, entsprechend einer standardisierte Schnittebene 4.
c) Anpassen des Austauschschaufelteils 3 an die Ist-Geometrie des Restschaufelblatts 2, wobei dieser Schritt besondere Aufmerksamkeit verlangt. Insbesondere durch den Betrieb der Hochdruckturbinenschaufel im Triebwerk kann nämlich die Sollkontur erheblich von der Ist-Kontur der zu reparierenden Turbinenschaufel abweichen. Daher ist das Austauschschaufelteil 3 mit Übermaß an der Innen- und Außenkontur hergestellt. Dabei muss das Übermaß derart gewählt werden, dass alle bzw. die meisten der realen Ist- Konturen an der zu fügenden Fläche des Restschaufelblatts 2 abgedeckt werden können. Nach entsprechender Anpassung des Austauschschaufelteils an die Ist-Kontur des Restschaufelblatts 2 und insbesondere Beachtung, dass keine sprungartigen Änderungen der Innen- und Außenkontur entstehen, erfolgt der nächste Verfahrensschritt.
d) Durch Fügen des Austauschschaufelteils mit dem Restschaufelblatt 2 wird das reparierte Turbinenschaufelblatt erzeugt. Dabei erfolgt der Fügeschritt durch kombiniertes Diffusions-(Löt-) und Strahlschweißfügen. Das Diffusions- fügen bzw. Löten kann beispielsweise zunächst als Hochtemperaturlöten durchgeführt werden, dabei werden mit einem geeigneten Lot entweder die gesamte Schnittstelle oder nur die Stege 5, welche die einzelnen Kammern 6 voneinander trennen, belotet. Das Beloten erfolgt entweder mit einem Lotformteil, durch PVD-Beschichten oder durch Paste. Nach dem Beloten erfolgt das Hochtemperaturlöten entweder im Vakuumofen oder induktiv unter Schutzgasatmosphäre. Danach ist die Innenkontur gegebenenfalls zusammen mit der Außenkontur gefügt. Das Fügen der Außenkontur erfolgt durch Strahlschweißen. Im Falle einer bereits durch Hochtemperaturlöten gefügten Außenkontur 8 wird die Lötnaht "überschweißt".

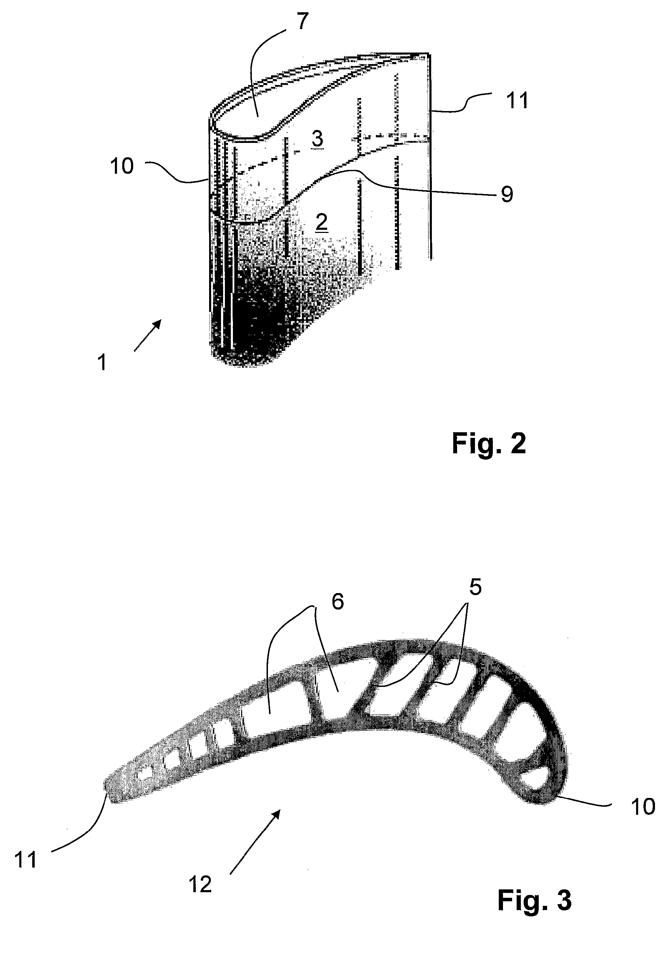

Eine auf diese Weise reparierte Turbinenschaufel ist perspektivisch in Figur 2 dargestellt.

Hier ist deutlich die Schweißnaht 9 zu erkennen, welche das Restschaufelblatt 2 mit dem Austauschschaufelteil 3 mit der Schaufelspitze 7 verbindet. Die Turbinenschaufel 1 ist dabei von der Schaufelvorderkante 10 bis zur Schaufelhinterkante 11 frei von sprunghaften Übergängen, welche die Funktion der reparierten Turbinenschaufel, insbesondere deren Aerodynamik, ungünstig beeinflussen würden.

Figur 3 zeigt einen Schnitt durch ein bereits oben erwähntes Lotformteil 12, welches mit der Außenkontur 8 des Restschaufelblatts 2 von der Schaufelvorderkante 10 bis zur Schaufelhinterkante 11 kongruent übereinstimmt. Ferner sind die entsprechenden Stege 5 und Kammern 6 identisch den im Restschaufelblatt 2 vorhandenen Stegen 5 und Kammern 6 gegenüberstehend ausgebildet. Die Schnittebene ermöglicht auch hier ein passgenaues Fügen des Austauschschaufelteils 3 mit dem Restschaufelblatt 2.

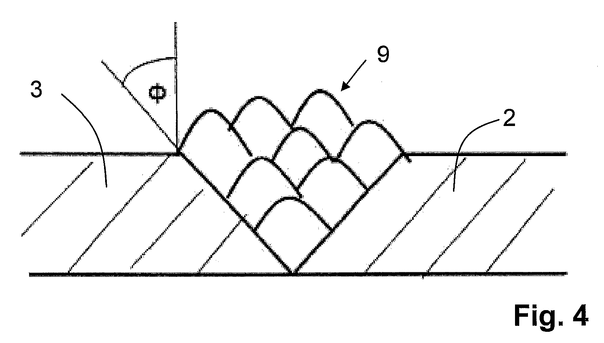

Schließlich zeigt Figur 4 eine weitere Ausführungsform einer Schweißverbindung durch Auftragsschweißen. Dazu werden die zu fügenden Teile, das Restschaufelblatt 2 und das Austauschschaufelteil 3, an der Außenkontur um einen Winkel Φ angeschrägt. Typischerweise ist Φ gleich 45°. Anschließend wird durch Auftragsschweißen der V-förmige Spalt mit Zusatzwerkstoff, beispielsweise Pulver oder Draht, ausgefüllt und dadurch eine Verbindung zwischen Zusatzwerkstoff, Austauschschaufelteil 3 und Restschaufelblatt 2 hergestellt. Gegebenenfalls kann auch bei dieser Variante mit, insbesondere induktiver, Vorwärmung gearbeitet werden. Der in Form von Pulver oder Draht vorliegende Zusatzwerkstoff kann entweder artgleich oder artfremd sein. Durch Verwendung eines artfremden Zusatzwerkstoffes können die metallurgischen Eigenschaften bzw. die Schweißeignung der Verbindung positiv beeinflusst werden.

## Patentansprüche

1. Verfahren zur Reparatur von Turbinenschaufeln (1), die hohl ausgebildet sind, wobei in ihrem Inneren Stege (5) vorhanden sind, mittels welcher Kammern (6) ausgebildet werden, durch Austausch zumindest eines Teils des Schaufelprofils, wobei das Verfahren folgende Schritte aufweist:
a) Herstellen eines Austauschschaufelteils (3);
b) Abtrennen des beschädigten Bereichs mit standardisierter Schnittebene, wobei ein Restschaufelblatt (2) verbleibt;
c) Anpassen des Austauschschaufelteils (3) an die Ist-Geometrie des Restschaufelblattes (2); und danach
d) Verbinden bzw. Fügen des Austauschschaufelteils (3) mit dem Restschaufelblatt (2) durch Löten der Stege (5) des Austauschschaufelteils (3) und des Restschaufelblatts (2) und Schweißen einer Außenkontur (8).

2. Verfahren nach Anspruch 1, **dadurch gekennzeichnet, dass** nach dem Verbinden des Austauschschaufelteils mit dem Restschaufelblatt durch kombiniertes Löten, insbesondere Hochtemperaturlöten, und Schweißen, insbesondere Strahlschweißen (Schritt d)) eine Nach- und Endbearbeitung erfolgt (Schritt e) und danach ggf. ein Prüfen der reparierten Turbinenschaufel erfolgt (Schritt f).

3. Verfahren zur Reparatur von Turbinenschaufeln nach einem der Patentansprüche 1 und 2, wobei das Schweißen, insbesondere nach Strahlschweißen, nach dem Löten, insbesondere Hochtemperaturlöten, das Fügen der Außenkontur durch Strahlschweißen erfolgt.

4. Verfahren zur Reparatur von Turbinenschaufeln nach einem der Patentansprüche 1 bis 3, wobei das Schweißen, insbesondere Strahlschweißen, als Laserschweißen, Stumpfschweißung oder Fügen durch Auftragsschweißen erfolgt.

5. Patentanspruch Verfahren zur Reparatur von Turbinenschaufeln nach einem der Ansprüche 1 bis 4, wobei das Austauschschaufelteil mit Übermaß an der Innen- und Außenkontur hergestellt wird.

6. Verfahren zur Reparatur von Turbinenschaufeln nach Patentanspruch 5, wobei die Ist-Geometrie der zu fügenden Fläche des Restschaufelblatts erfasst wird.

7. Verfahren zur Reparatur von Turbinenschaufeln nach Patentanspruch 6, wobei das Austauschschaufelteil an die Ist-Geometrie des Restschaufelblatts angepasst wird.

8. Verfahren zur Reparatur von Turbinenschaufeln nach Patentanspruch1, wobei das Austauschschaufelteil im SLM-Verfahren hergestellt wird.

## Claims

1. A method for repairing turbine blades (1), which are hollow, wherein said blades have webs (5) in their interior forming chambers (6), by replacing at least a portion of the blade profile, said method comprising the steps of:
a) preparing a replacement blade part (3);
b) separating the damaged section with standardised sectional plane, wherein a remaining blade (2) remains;
c) adjusting the replacement blade part (3) to the actual geometry of the remaining blade (2); and then
d) connecting or joining the replacement blade part (3) with the remaining blade (2) by soldering the webs (5) of the replacement blade part (3) and the remaining blade (2) and welding an outer contour (8).

2. The method of claim 1, **characterised in that** after connecting the replacement blade part with the remaining blade by combined soldering, specifically high-temperature soldering, and welding, specifically beam welding (step d) a post-processing and fnishing takes place (step e) and thereafter, where necessary, an inspection of the repaired turbine blade takes place (step f).

3. The method for repairing turbine blades of any one of the claims 1 and 2, wherein the welding, specifically after beam welding, after soldering, specifically high-temperature soldering, the joining of the outer contour occurs using beam welding,

4. The method for repairing turbine blades of any one of the claims 1 to 3, wherein the welding, specifically beam welding, occurs as laser welding, butt welding or joining using weld cladding.

5. Claim The method for repairing turbine blades of any one of the claims 1 to 4, wherein the replacement blade part is prepared with excess of the inner and outer contour.

6. The method for repairing turbine blades of claim 5, wherein the actual geometry of the surface of the remaining blade to be joined is recorded.

7. The method for repairing turbine blades of claim 6, wherein the replacement blade part is adjusted to the actual geometry of the remaining blade,

8. The method for repairing turbine blades of claim 1, wherein the replacement blade part is prepared using the SLM method.

## Revendications

1. Procédé de réparation d'aubes de turbine (1) qui ont une configuration creuse, des nervures (5) étant présentes à l'intérieur qui forment des compartiments (6), par remplacement d'au moins une partie du profilé d'aube, le procédé comprenant les étapes suivantes consistant à :
a) fabriquer une partie d'aube de rechange (3) ;
b) séparer la zone endommagée avec un plan de coupe normalisé en laissant un reste de pale d'aube (2) ;
c) adapter la partie d'aube de rechange (3) à la géométrie réelle du reste de pale d'aube (2) ; puis
d) relier ou assembler la partie d'aube de rechange (3) au reste de pale d'aube (2) par brasage des nervures (5) de la partie d'aube de rechange (3) et du reste de pale d'aube (2) et par soudage d'un contour extérieur (8).

2. Procédé selon la revendication 1, **caractérisé en ce que**, après avoir relié la partie d'aube de rechange au reste de pale d'aube par brasage combiné, notamment par brasage à température élevée, et par soudage, notamment par soudage par rayonnement (étape d), on effectue un post-traitement et un traitement final (étape e) puis, si nécessaire on effectue un contrôle de l'aube de turbine réparée (étape f).

3. Procédé de réparation d'aubes de turbine selon l'une quelconque des revendications 1 et 2, dans lequel, après le soudage, notamment le soudage par rayonnement, le brasage, notamment le brasage à haute température, on effectue l'assemblage du contour extérieur par soudage par rayonnement.

4. Procédé de réparation d'aubes de turbine selon l'une des revendications 1 à 3, dans lequel le soudage, notamment soudage par rayonnement, est effectué sous la forme d'un soudage au laser, d'un soudage bout à bout ou d'un assemblage par soudage par apport de métal.

5. Procédé de réparation d'aubes de turbine selon l'une quelconque des revendications 1 à 4, dans lequel la partie d'aube de rechange est fabriquée à surmesure au niveau du contour intérieur et extérieur.

6. Procédé de réparation d'aubes de turbine selon la revendication 5, dans lequel on détecte la géométrie réelle de la surface à assembler du reste de pale d'aube.

7. Procédé de réparation d'aubes de turbine selon la revendication 6, dans lequel la partie d'aube de rechange est adaptée à la géométrie réelle du reste de pale d'aube.

8. Procédé de réparation d'aubes de turbine selon la revendication 1, dans lequel la partie d'aube de rechange est fabriqué par le procédé de fusion sélective par laser (Selective Laser Melting = SLM).
